Europäisches Patentamt

European Patent Office

Office européen des brevets

(19)

(11) Numéro de publication : **0 057 651**
**B1**

(12) **FASCICULE DE BREVET EUROPÉEN**

(45) Date de publication du fascicule du brevet :
03.04.85

(21) Numéro de dépôt : **82420015.8**

(22) Date de dépôt : **26.01.82**

(51) Int. Cl.⁴ : **C 04 B 35/60, C 09 K 3/14**

(54) **Procédé de solidification et de refroidissement rapides par coulée continue de produits fondus à base d'oxydes métalliques.**

(30) Priorité : 30.01.81 FR 8102179

(43) Date de publication de la demande :
11.08.82 Bulletin 82/32

(45) Mention de la délivrance du brevet :
03.04.85 Bulletin 85/14

(84) Etats contractants désignés :
**AT BE CH DE GB IT LI NL SE**

(56) Documents cités :
FR-A- 2 274 382
FR-A- 2 422 462
FR-A- 2 436 638
US-A- 3 447 590
US-A- 3 646 713

(73) Titulaire : **Société Française d'Electrométallurgie-SOFREM**
**10, rue du Général Foy**
**F-75008 Paris (FR)**

(72) Inventeur : **Septier, Louis "Les Chamois"**
**Cité Jardins Rue du Mont Blanc Chedde**
**F-74190 Le Fayet (FR)**
Inventeur : **Demange, Michel**
**La Combe - Maffrey**
**F-74190 Le Fayet (FR)**

(74) Mandataire : **Pascaud, Claude et al**
**PECHINEY 28, rue de Bonnel**
**F-69433 Lyon Cedex 3 (FR)**

## Description

La présente invention concerne un procédé de solidification et de refroidissement rapides par coulée continue, de produits fondus à base d'oxydes métalliques.

Dans de nombreux processus industriels, on cherche à obtenir une solidification et un refroidissement rapides de produits fondus à base d'oxydes métalliques, soit pour des raisons de sécurité ou de commodité : par exemple, lorsqu'on veut rapidement évacuer, vers le crassier, les laitiers ou scories épuisées provenant d'opérations électrométallurgiques sans prendre le risque de la transporter à l'état liquide ou partiellement solidifiées, soit pour des raisons structurales, lorsque le refroidissement rapide est nécessaire pour conférer au produit certaines caractéristiques physiques. Par exemple, il est connu que les produits abrasifs à base de corindon et à base de corindon et de zircone ont des propriétés mécaniques d'autant meilleures qu'ils ont été obtenus par un refroidissement plus rapide du produit élaboré par fusion au four électrique. Ce fait a été signalé, notamment, dans le brevet français 1 332 975 de CARBORUNDUM Compagny — qui préconise la coulée dans un moule en graphite —, et les demandes FR-A-2 127 231 de PECHINEY (coulée du produit fondu sur des boulets en acier), FR-A-2 133 595 de TREIBACHER CHEMISCHE WERKE AG (coulée sur des billes de fer), et FR-A-2 166 082 de NORTON (coulée entre des plaques métalliques massives écartées de 1,6 à 12,7 mm).

Pour des raisons évidentes, il serait souhaitable que le refroidissement rapide soit effectué de façon continue. En effet, dans le cas des scories et laitiers, le refroidissement en lingotières, habituellement pratiqué, est très lent et il nécessite une multiplicité de lingotières qui encombrent les ateliers. Dans le cas des abrasifs à cristallisation fine, la coulée entre plaques métalliques rapprochées ou sur boulets en aciers conduit à une productivité très faible.

On a déjà écrit antérieurement un certain nombre de procédé de refroidissement rapide par coulée continue.

Le brevet français 1 319 102 de NORTON décrit la coulée d'alumine électrofondue, en couche mince, sur un cylindre creux, refroidi par aspersion d'eau sur sa face interne.

Le brevet américain US-A-3 993 119 (FR-A-2 290 266) de NORTON décrit un dispositif de coulée entre des plaques métalliques épaisses, fixées par leur base sur un convoyeur sans fin qui passe sur des rouleaux provoquant l'écartement des plaques et la séparation des blocs d'abrasif refroidi qui tombent dans un dispositif de réception.

La demande FR-A-2 422 462 de NORTON décrit un autre dispositif de coulée continue entre bandes métalliques refroidies et maintenues en contact avec l'abrasif en cours de solidification par une série de rouleaux de guidage.

Ces différents procédés requièrent des appareillages mécaniquement complexes et sont mal adaptés à une production continue, massive, et à bas prix, d'abrasifs électrofondus à cristallisation fine.

La présente invention est basée sur l'utilisation, comme organe de refroidissement des produits électrofondus, de deux cylindres refroidis, horizontaux et d'axes parallèles.

Le procédé de solidification et de refroidissement rapide, par coulée continue, de produits fondus à base d'oxydes métalliques, objet de la présente invention, consiste à introduire le produit fondu dans l'espace convergent formé par deux cylindres métalliques d'axes parallèles et sensiblement horizontaux, tournant en sens inverse, animés d'une vitesse périphérique sensiblement égale, et dont les axes sont écartés d'une distance égale à la somme des rayons de chaque cylindre augmentée d'au moins un millimètre, à refroidir la paroi des cylindres, à régler la vitesse de rotation des cylindres, et la puissance de refroidissement de façon telle qu'un film liquide existe encore au niveau du plan commun des axes de rotation, entre les deux couches externes solidifiées, à obtenir que ce film se prolonge au-delà dudit plan d'une longueur qui est au moins égale à un centimètre, et à récupérer le produit solidifié dans l'espace divergent formé entre les cylindres.

L'appareillage, pour la mise en œuvre de ce procédé, comprend essentiellement une alimentation contrôlable en produit fondu, deux cylindres métalliques d'axes parallèles et sensiblement horizontaux, tournant en sens inverse, animés d'une vitesse périphérique sensiblement égale, dont les axes sont écartés d'une distance égale à la somme des rayons de chaque cylindre augmentée d'au moins un millimètre, au moins un moyen de refroidissement et un moyen de mise en rotation synchrone, en sens opposé et à une vitesse réglable desdits cylindres et un moyen de récupération du produit solidifié.

La figure 1 représente, en coupe verticale, un dispositif pour la mise en œuvre de l'invention.

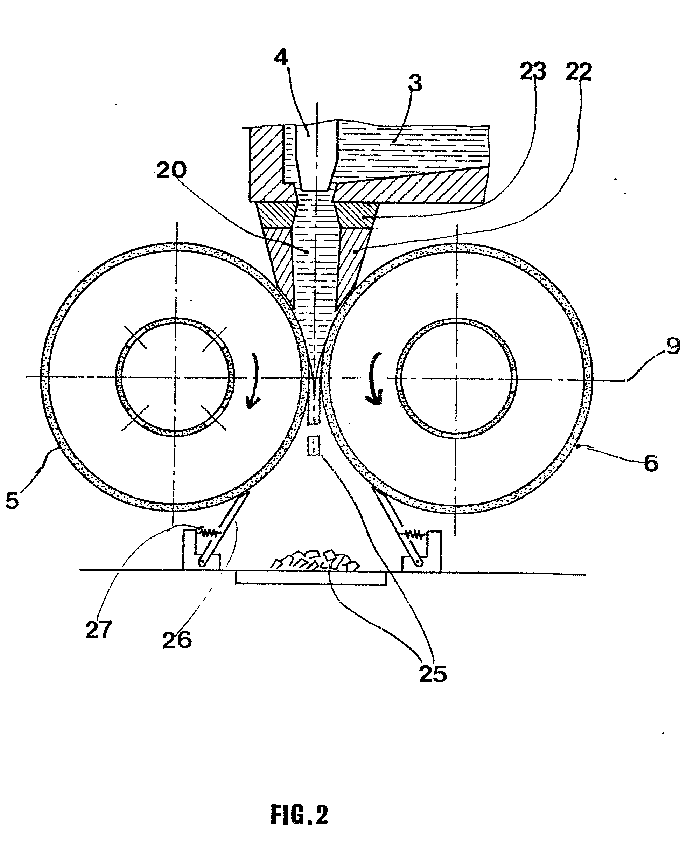

La figure 2 représente ce même dispositif, avec une variante de l'alimentation en produit fondu.

La figure 3 représente le détail du processus de solidification.

Les figures 4, 5 et 6 représentent des moyens de réaliser l'étanchéité à l'extrémité des cylindres.

Les figures 7a, 7b, c, 7d représentent quatre dispositions possibles des cylindres.

Le produit fondu à solidifier peut provenir directement du four de fusion (1) ou d'un moyen de stockage, tel qu'une poche, dont seule la partie inférieure a été représentée.

A la partie inférieure du four (1), on dispose un orifice de coulée (2) obturable par tout moyen connu, réalisé de préférence en graphite ou éventuellement en matériau réfractaire.

Le produit fondu (3) s'écoule par l'orifice (2) en manœuvrant le tampon d'obturation (4).

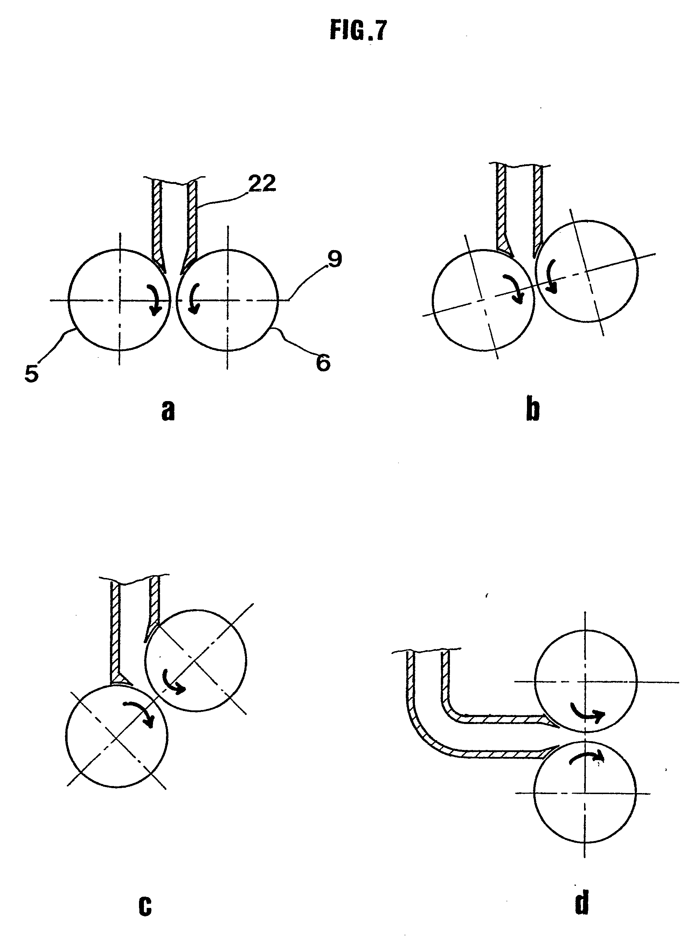

Le dispositif de refroidissement rapide et continu comporte deux cylindres (5) et (6) dont les axes respectifs (7) et (8) sont parallèles et sensiblement horizontaux. Le plan (9) passant par les axes (7) et (8) est horizontal, dans le cas représenté, mais cette disposition n'est pas obligatoire, comme on peut le voir sur la figure 7. Les cylindres sont disposés de façon à laisser entre eux, au point le plus rapproché, c'est-à-dire dans le plan (9) de leurs axes, un espace au moins égal à un millimètre. Cette distance peut être augmentée, selon le type de produit coulé, jusqu'à 10 à 20 mm, par exemple, sans que cela constitue une limite absolue de l'invention.

Les deux cylindres sont mis en rotation synchrone, et en sens opposé selon le sens des flèches, par un dispositif moteur et une chaîne cinématique de tout type connu permettant de faire varier la vitesse de rotation. L'un des cylindres peut être monté sur des paliers élastiques.

Les deux cylindres déterminent ainsi entre eux un espace convergent (10) dans lequel est introduit le produit à refroidir, et un espace divergent (11) dans lequel on récupère le produit solidifié.

Les deux cylindres (5) et (6) sont réalisés en un métal bon conducteur de la chaleur et ils doivent être mécaniquement résistants. On peut utiliser de l'acier, du cuivre pur ou de préférence allié, pour augmenter sa dureté par des additions connues telles que fer, cadmium, chrome ou encore de l'acier cuivré ou du cuivre recouvert d'une frette en acier. Les cylindres peuvent être pleins et, dans ce cas, le refroidissement ne peut être assuré que par aspersion ou arrosage externe avec de l'eau en évitant tout contact entre l'eau et le produit fondu ou, et de préférence, creux, et comporter un refroidissement interne et, optionnellement, un refroidissement externe.

La partie interne de chaque cylindre constitue une chambre (12) (13) à circulation d'eau ou d'un fluide de refroidissement, introduit et évacué par une pluralité d'orifices (14), de façon à assurer un refroidissement efficace et homogène des parois (15).

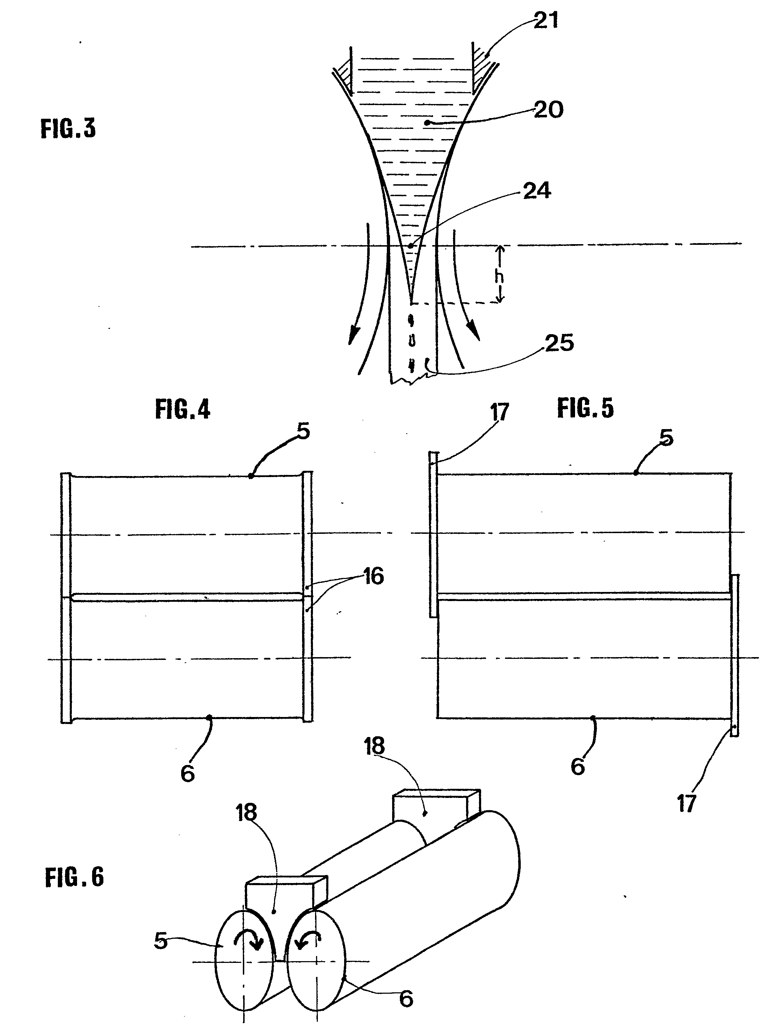

Les deux extrémités de l'espace convergent (10) dans lequel est introduit le produit à solidifier doivent être obturées. Cette obturation peut être effectuée en prévoyant, aux deux extrémités des cylindres, une zone (16) de diamètre supérieur qui vient en contact avec le cylindre antagoniste, mais cette disposition fixe de façon définitive l'écartement des cylindres, ce qui peut être inacceptable. Un autre mode d'obturation (figure 5) consiste à unir les extrémités opposées de chaque cylindre d'un disque (17) de diamètre suffisant pour assurer, par simple frottement, l'étanchéité recherchée.

La figure 6 représente un autre moyen consistant en deux pièces d'obturation (18), fixes, réalisées de préférence en graphite ou en matériau réfractaire compact ou fibreux.

La figure 7 montre différentes dispositions possibles des cylindres : plan des axes horizontal (a), plan des axes légèrement incliné (b), incliné à environ 45° (c) et sensiblement vertical (d). Dans les cas (a) et (b), le produit fondu peut être simplement coulé dans l'espace convergent entre les cylindres. Dans les cas (c) et (d), il est nécessaire de l'introduire au moyen d'une busette qui vient en appui étanche sur les parois des cylindres.

Dans les différents cas, les cylindres sont, en principe, de même diamètre. Leur rotation étant synchrone, on assure ainsi une vitesse périphérique égale. Si cette vitesse était différente pour chaque cylindre, il y aurait frottement du moins rapide contre le produit solide et une usure excessive. Il serait également possible que les deux cylindres soient de diamètres inégaux et que la vitesse de rotation soit réglée individuellement pour assurer une vitesse périphérique égale, mais il n'apparaît pas que cette disposition présente des avantages particuliers.

Le diamètre des cylindres et leur longueur peuvent être choisis dans les limites relativement larges et ne constituent pas une limitation de l'invention. Le diamètre peut aller de une ou quelques dizaines de centimètres à un mètre et au-delà, et la longueur peut atteindre et même dépasser un mètre. Souvent, ce seront les possibilités de réalisation et d'usinage (rectification de la surface) qui en fixeront les limites supérieures. Cependant, de façon générale, des cylindres de grand diamètre se prêtent mieux à un réglage précis de la hauteur du produit fondu (20) dans l'espace convergent (10).

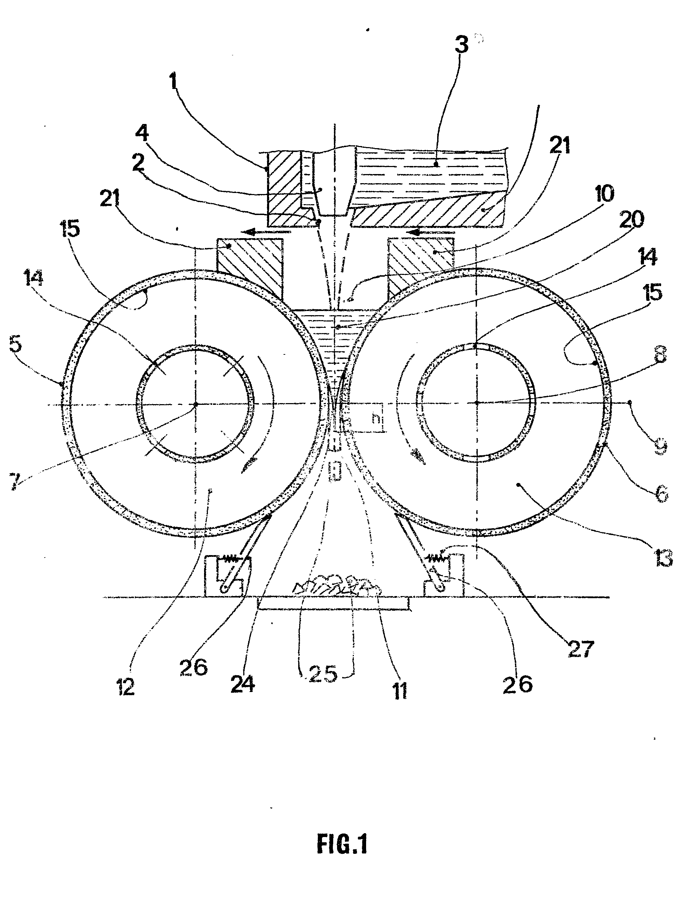

Sur la figure 1, l'alimentation du produit liquide est effectuée par simple écoulement. On règle la vitesse d'écoulement de façon à maintenir une hauteur sensiblement constante du produit liquide (20) dans l'espace convergent (10). Deux barrières latérales (21) limitent le risque d'avoir une trop grande surface de contact entre la paroi des cylindres et le produit liquide dans le cas où son niveau s'élèverait exagérément. Il en résulterait une solidification prématurée du produit qui bloquerait le fonctionnement de l'appareil.

Dans le cas où le produit doit être solidifié à l'abri de l'air, comme par exemple, les abrasifs électrofondus à base de corindon ou de corindon-zircone, une circulation de gaz inerte ou réducteur peut êre assurée dans l'espace convergent (10). Elle est symbolisée par les deux flèches.

Un autre moyen de coulée du produit fondu, qui évite son contact avec l'atmosphère, consiste à utiliser une busette (22) qui vient en appui, à frottement doux et étanche, sur les parois du cylindre. Elle est réalisée, de préférence, en graphite. La partie supérieure (23) peut être réalisée en un matériau souple ou élastique.

Le fonctionnement de l'appareillage s'opère de la façon suivante : la vitesse commune des cylindres et le débit d'eau de refroidissement sont réglés de telle manière qu'un film liquide (24) existe encore au niveau du plan commun des axes de rotation. Ce film doit avoir une épaisseur suffisante pour permettre une déformation des parois déjà solidifiées et pas trop grande pour éviter que le liquide ne « fuie » par le bas. Ce film se prolonge au-dessous du plan des axes d'une hauteur « h » qui ne doit pas être inférieure à environ un centimètre. Lors du démarrage de l'appareil, surtout si l'écartement des rouleaux est important, il peut être avantageux d'obturer l'intervalle entre les rouleaux par un moyen tel que de la tresse d'amiante, qui s'éliminera dès le début de la rotation.

Au contact de la surface froide des cylindres, la matière se solidifie partiellement est entraînée vers le bas par la rotation des cylindres. Un point très important de l'invention est le réglage de la vitesse de rotation des cylindres en fonction de la puissance de refroidissement de l'appareil de manière que, dans la zone de distance minimale entre les cylindres (zone limitée par les deux génératrices des cylindres situées dans le plan horizontal des axes de rotation), une partie du produit soit encore à l'état liquide. Ce liquide forme ainsi un film dans cette zone médiane. Ce film permet aux deux couches solides de se rapprocher l'une de l'autre et de passer entre les cylindres. Ce ne serait pas le cas si la solidification était achevée au moment où la matière atteint la zone de distance minimale entre les cylindres, le produit solide obtenu n'étant, en règle générale, que peu ou pas malléable.

Le produit solidifié est récupéré dans l'espace divergent (11) entre les cylindres. Selon sa nature, il se fragmente spontanément en blocs de dimensions variables, ou peut rester à l'état de plaques. Le produit solidifié (25) peut être récupéré par tout moyen classique : bac de réception, convoyeur à bandes, ou tomber directement dans un concasseur ou un broyeur.

Accessoirement, deux racleurs (26), maintenus en appui par des moyens élastiques (27) peuvent assurer l'élimination des traces de produit solidifié qui seraient restées adhérentes sur la paroi externe des cylindres.

L'appareillage peut, enfin, comporter un moyen de refroidissement accéléré du produit solidifié par arrosage ou pulvérisation d'eau, et un moyen de refroidissement supplémentaire des cylindres, par arrosage de la paroi externe, suivi d'un moyen de séchage qui garantisse que ladite paroi soit parfaitement débarrassée de toute trace d'eau à son arrivée dans la zone de coulée.

Exemples d'application

On a réalisé une première version d'un appareil pour la mise en œuvre du procédé, objet de l'invention, comportant deux cylindres creux en cuivre, de 126 mm de diamètre et de 300 mm de longueur, disposés de telle manière que leurs axes soient parallèles, dans un plan horizontal et situés à 130 mm de distance.

Avec cet appareil réglé à une vitesse de rotation de 4,5 tours par minute et un débit d'eau de 40 litres par minute dans chaque cylindre, nous avons pu solidifier environ 6 kg par minute de corindon-zircone à 20 % de $ZrO_2$ et 68 % d'$Al_2O_3$. Le produit, à la sortie des cylindres, se fragmente spontanément en morceaux polygonaux de 3 à 15 mm d'arête sur une épaisseur de 4 mm. Certains morceaux se brisent suivant le plan médian (retassure). Le travail de concassage est ainsi très bien préparé.

Dans une autre réalisation de l'invention, on a disposé deux cylindres en acier de 350 mm de diamètre et de 1 000 mm de longueur. Leurs axes parallèles et contenus dans un même plan horizontal sont situés à 354 mm de distance. Ils sont animés en rotation à la vitesse de 3,5 tours par minute.

Les cylindres sont munis, à une de leur extrémité, d'une joue de 450 mm de diamètre, en acier également. Les cylindres sont placés tête-bêche de telle sorte que ces joues viennent limiter, latéralement, l'espace libre entre les cylindres.

Chaque cylindre est refroidi par une circulation de 200 litres d'eau froide par minute.

Cet appareil a permis de solidifier en plaques minces 42 kg par minute de corindon-zircone à 25 % de $ZrO_2$ et 75 % d'alumine.

Une troisième réalisation comporte deux cylindres en cuivre de 1 000 mm de long et de 346 mm de diamètre extérieur chemisés, par frittage à chaud, avec deux manchons en acier dur trempé de 2 mm d'épaisseur et de 350 mm de diamètre extérieur. Les cylindres en cuivre sont raidis intérieurement par des ailettes en cuivre disposées suivant des plans diamétraux.

Ces ailettes favorisent, de plus, les échanges thermiques entre le métal du cylindre et l'eau de refroidissement. Les cylindres sont munis de joues en aciers de 450 mm de diamètre selon la figure 5.

Les axes horizontaux et parallèles de ces cylindres sont contenus dans un plan oblique incliné à 25° sur le plan horizontal et situés à 355 mm de distance.

Cette disposition permet une amélioration de l'alimentation en corindon-zircone liquide de la machine. Avec une vitesse de rotation des cylindres de 3 tours par minute et une alimentation en eau de refroidissement de 220 litres par minute et par cylindre, on a pu solidifier en continu du corindon-zircone à 25 % de $ZrO_2$ au rythme de 48 kg/minute.

L'invention s'applique plus particulièrement à la solidification et au refroidissement rapides, par coulée continue, de produits fondus non métalliques, à base d'oxydes métalliques dont le point de fusion peut atteindre jusqu'à 2 000 °C. C'est le cas du corindon blanc (alumine pure électrofondue), des corindons noirs (alumine électrofondue contenant quelques pour cent d'impuretés, telles qu'oxydes de fer, de titane, de silicium), de corindon-zircone, des scories et laitiers métallurgiques, à base de chaux, silice, magnésie, alumine et d'oxydes métalliques divers dont les points de fusion se situent entre 1 000° et plus de 2 000 °C et des abrasifs spéciaux à base d'alumine et d'oxycarbures d'aluminium.

## Revendications

1. Procédé de solidification et de refroidissement rapides, par coulée continue, de produits fondus à base d'oxydes métalliques, caractérisé en ce que l'on introduit le produit fondu dans l'espace convergent formé par deux cylindres métalliques d'axes parallèles et sensiblement horizontaux, tournant en sens inverse, animés d'une vitesse périphérique sensiblement égale, et dont les axes sont écartés d'une distance égale à la somme des rayons de chaque cylindre augmentée d'au moins un millimètre, en ce que l'on refroidit la paroi de cylindres, en ce que l'on règle la vitesse de rotation des cylindres et la puissance de refroidissement de façon telle qu'un film liquide existe encore au niveau du plan commun des axes de rotation, entre les deux couches externes solidifiées et en ce que ce film se prolonge au-delà du dit plan d'une longueur qui est au moins égale à un centimètre, et en ce que l'on récupère le produit solidifié dans l'espace divergent formé entre les cylindres ;

2. Procédé de solidification et de refroidissement rapides, par coulée continue, selon la revendication 1, caractérisé en ce que les deux cylindres sont de diamètre égal et tournent à la même vitesse.

3. Procédé de solidification et de refroidissement rapides, par coulée continue, selon la revendication 1, caractérisé en ce que les deux cylindres sont de diamètre inégal et tournent à des vitesses inégales de façon que leur vitesse périphérique respective soient égales.

4. Procédé de solidification et de refroidissement rapides, par coulée continue, selon l'une des revendications 1 à 3, caractérisé en ce que les cylindres sont creux et en ce que l'on refroidit leur paroi interne par circulation d'un fluide.

5. Procédé de solidification et de refroidissement rapides, par coulée continue, selon la revendication 4, caractérisé en ce que l'on refroidit la paroi interne des cylindres par circulation d'eau.

6. Procédé de solidification et de refroidissement rapides, par coulée continue, selon l'une quelconque des revendications 1 à 5, caractérisé en ce que l'on refroidit la paroi externe des cylindres par pulvérisation d'eau et en ce que l'on élimine ensuite toute trace d'eau sur les parois avant qu'elles ne reviennent au contact du produit fondu.

7. Procédé de solidification et de refroidissement rapides, par coulée continue, selon l'une quelconque des revendications 1 à 6, caractérisé en ce que l'espace convergent dans lequel on introduit le produit fondu est parcouru par un courant de gaz inerte.

8. Procédé de solidification et de refroidissement rapides, par coulée continue, selon l'une quelconque des revendications 1 à 7, caractérisé en ce que l'espace convergent dans lequel on introduit le produit fondu est sensiblement étanche.

9. Procédé de solidification et de refroidissement rapides, par coulée continue, selon l'une quelconque des revendications 1 à 8, caratérisé en ce que, avant de commencer à introduire le produit fondu, on obture l'espace entre les deux cylindres par un moyen d'obturation qui s'élimine lors de la mise en rotation desdits cylindres.

## Claims

1. A process for rapid solidification and cooling, by continuous pouring, of molten products based on metal oxides, characterised in that the molten product is introduced into the convergent space formed by two metal cylinders having their axes parallel and substantially horizontal, which rotate in opposite directions, which are moved at substantially equal peripheral speeds, and whose axes are spaced by a distance equal to the sum of the radii of each cylinder, increased by at least one millimetre, that the wall of the cylinders is cooled, that the speed of rotation of the cylinders and the cooling output are regulated in such a way that a liquid film still exists at the location of the common plane of the axes of rotation, between the two solidified outside layers, that the film is extended beyond said plane by a length which is at least equal to one centimetre, and that the solidified product is recovered in the divergent space formed between the cylinders.

2. A process for rapid solidification and cooling, by continuous pouring, according to claim 1, characterised in that the two cylinders are equal in diameter and rotate at the same speed.

3. A process for rapid solidification and cooling, by continuous pouring, according to claim 1, characterised in that the two cylinders are unequal in diameter and rotate at unequal speeds so that their respective peripheral speeds are equal.

4. A process for rapid solidification and cooling, by continuous pouring, according to one of claims 1 to 3 characterised in that the cylinders are hollow and that their inside wall is cooled by the circulation of a fluid.

5. A process for rapid solidification and cooling, by continuous pouring, according to claim 4 characterised in that the internal wall of the cylinders is cooled by circulating water.

6. A process for rapid solidification and cooling, by continuous pouring, according to any one of claims 1 to 5 characterised in that the external wall of the cylinders is cooled by spraying water and that all traces of water on the walls are then removed before the walls come into contact with the molten product again.

7. A process for rapid solidification and cooling, by continuous pouring, according to any one of claims 1 to 6 characterised in that the convergent space into which the molten product is introduced has a flow of inert gas passing therethrough.

8. A process for rapid solidification and cooling, by continuous pouring, according to any one of claims 1 to 7 characterised in that the convergent space into which the molten product is introduced is substantially fluid-tight.

9. A process for rapid solidification and cooling, by continuous pouring, according to any one of claims 1 to 8 characterised in that, before the operation of introducing the molten product is begun, the space between the two cylinders is closed off by a closure means which is removed when said cylinders are set rotating.

**Ansprüche**

1. Verfahren zum schnellen Erstarren und Abkühlen durch Stranggießen von geschmolzenen Materialien auf der Basis von Metalloxiden, gekennzeichnet durch Einführen des schmolzenen Materials in den konvergierenden Zwischenraum, der durch zwei metallische Zylinder gebildet ist, die parallele Achsen haben, im wesentlichen waagerecht sind, sich gegenläufig drehen, mit im wesentlichen gleicher Umfangsgeschwindigkeit angetrieben werden und deren Achsen durch einen Abstand entfernt sind, der gleich der Summe der Radien jedes Zylinders ist, vermehrt um wenigstens einen Millimeter, durch Abkühlen der Wand der Zylinder, durch Regeln der Drehzahl der Zylinder und der Kühlleistung derart, daß in Höhe der den Drehachsen gemeinsamen Ebene zwischen den beiden äusseren erstarrten Schichten noch ein flüssiger Film besteht, wobei dieser Film sich über die genannte Ebene um eine Länge fortsetzt, die wenigstens gleich einem Zentimeter ist, und durch Aufsammeln des erstarrten Materials in dem zwischen den Zylindern gebildeten divergierenden Raum.

2. Verfahren zum schnellen Erstarren und Abkühlen durch Stranggießen nach Anspruch 1, dadurch gekennzeichnet, daß die beiden Zylinder gleiche Durchmesser haben und sich mit gleicher Drehzahl drehen.

3. Verfahren zum schnellen Erstarren und Abkühlen durch Stranggießen nach Anspruch 1, dadurch gekennzeichnet, daß die beiden Zylinder gleichen Durchmesser haben und sich mit ungleicher Drehzahl derart drehen, daß ihre jeweiligen Umfangsgeschwindigkeiten gleich sind.

4. Verfahren zum schnellen Erstarren und Abkühlen durch Stranggießen nach einem der Ansprüche 1 bis 3, dadurch gekennzeichnet, daß die Zylinder hohl sind und daß ihre Innenwand durch Zirkulation eines Fluids abgekühlt wird.

5. Verfahren zum schnellen Erstarren und Abkühlen durch Stranggießen nach Anspruch 4, gekennzeichnet durch Abkühlen der Innenwand der Zylinder durch Zirkulation von Wasser.

6. Verfahren zum schnellen Erstarren und Abkühlen durch Stranggießen nach einem der Ansprüche 1 bis 5, gekennzeichnet durch Abkühlen der Außenwand der Zylinder durch Zerstäuben von Wasser und durch anschließendes Beseitigen aller Wasserspuren auf den Wänden, bevor sie in Berührung mit dem gegossenen Material kommen.

7. Verfahren zum schnellen Erstarren und Abkühlen durch Stranggießen nach einem der Ansprüche 1 bis 6, dadurch gekennzeichnet, daß der konvergierende Zwischenraum, in den das gegossene Material eingeführt wird, von einem Inertgasstrom durchströmt wird.

8. Verfahren zum schnellen Erstarren und Abkühlen durch Stranggießen nach einem der Ansprüche 1 bis 7, dadurch gekennzeichnet, daß der konvergierende Zwischenraum, in den das gegossene Material eingeführt wird, im wesentlichen dicht ist.

9. Verfahren zum schnellen Erstarren und Abkühlen durch Stranggießen nach einem der Ansprüche 1 bis 8, dadurch gekennzeichnet, daß vor dem Beginn des Einführens des geschmolzenen Materials der Zwischenraum zwischen den beiden Zylindern durch ein Verschlußmittel verschlossen wird, das beim Indrehungsversetzen der Zylinder verschwindet.

**FIG.1**

FIG.2

FIG.3

FIG.4

FIG.5

FIG.6

3

# FIG.7

a

b

c

d